# EUROPEAN PATENT SPECIFICATION

(11) **EP 0 470 074 B1**
(45) Date of publication and mention of the grant of the patent: **01.06.1994**
(21) Application number: 89912726.0
(22) Date of filing: 27.10.1989
(51) Int. Cl.: H02K 1/18, H02K 5/24, G11B 19/20

(54) **STABILIZED DISK DRIVE SPIN MOTOR**
STABILISIERTER DREHMOTOR FÜR PLATTENSPEICHERANTRIEB
MOTEUR DE MISE EN ROTATION STABILISE POUR UNITE DE DISQUES

(30) Priority: 20.04.1989 US 341040
(43) Date of publication of application: 12.02.1992
(73) Proprietor: Conner Peripherals, Inc., San José California 95131 (US)
(72) Inventor: LIN, Joseph, T., Cupertino, CA 95014 (US)
(74) Representative: Wright, Hugh Ronald
(86) International application number: US8904832
(87) International publication number: WO9013167

(56) References cited:
- EP-A- 0 315 419
- US-A- 4 129 796
- US-A- 4 285 016
- US-A- 4 336 470
- US-A- 4 599 664
- US-A- 4 612 468
- US-A- 4 634 908
- US-A- 4 779 165

## Description

### CROSS-REFERENCE TO RELATED APPLICATIONS

METHOD AND APPARATUS FOR BRUSHLESS DC MOTOR SPEED CONTROL, US-A-4 876 491, filed February 26, 1988, inventors Squares, et al., assigned to the assignee of the subject Application.

UNDER-THE-HUB DISK DRIVE SPIN MOTOR, Serial No. 301,797, filed January 25, 1989, inventors Stefansky et al., assigned to the assignee of the subject Application.

### BACKGROUND OF THE INVENTION

### Field of the Invention

The present invention relates to spin motors for disk drives; more particularly, to low power and low height spin motors.

### Description of the Related Art

Disk drive manufacturers and computer manufacturers usually establish standards for vibration and shock resistance for hard disk drives or (disk files) for data storage. The standards may be more stringent for disk drives intended for use in portable or lap-top computers or other harsh environments. Vibration and impact acceptance evaluations may be conducted by placing the drive being evaluated on a vibration table and subjecting the drive to vibrations of varying frequency and amplitude while the drive is operating. The performance of the drive is monitored to determine the frequency and amplitude of the applied vibrations which cause errors in seeking and/or track following. Seek and/or track following errors often result in "hesitations" in reading and/or writing data, and disk drives which are sensitive to applied vibrations of too low a frequency or amplitude may fail acceptance evaluations.

One effect of vibrations applied to a disk drive, and one cause of errors in seeking and/or track following is mechanical off-tracking, i.e., an unintended physical movement of the heads with respect to the disk(s). Mechanical off-tracking may be caused by movements of various structural components of the spin motor which cause the disk to tilt or wobble out of a plane normal to the axis of the motor spindle or by movements of other components of the disk drive with respect to the disk.

Among the criteria imposed on hard disk drives are vibration resistance, compactness, low weight, low power, and ease of manufacture -- particularly reduced part count. All of these criteria are usually important to a computer manufacturer selecting a disk drive for use in a specific computer or for a specific type of application. Resistance to applied vibrations depends in part on the internal operating vibrations experienced by a spin motor because applied and internal vibrations may add under certain circumstances. Accordingly, improving the resistance of hard disk drives to applied vibrations is a continuing goal of disk drive manufacturers.

Spin motors for hard disk drives are conventionally brushless motors, and thus the armature of the motor will be referred to as the stator and the magnets will be referred to as the rotor. However, in a spin motor where the armature rotates and brushes are used to contact the armature, the armature would be referred to the rotor and the magnets would be referred to as the stator.

### SUMMARY OF THE INVENTION

It is, therefore, an object of the present invention to provide a motor which has an improved resistance to applied vibrations.

Another object of the present invention is to provide a disk drive spin motor having an increased resonant frequency.

Another object of the present invention is to provide a low weight, low power, compact disk drive spin motor for a hard disk drive which has a resistance to applied vibrations of increased frequency and amplitude.

Another object of the present invention is to provide a spin motor for a disk drive which has a shaft supported at one end thereof by a base and which includes structure for stiffening the base in the region surrounding the shaft.

Another object of the present invention is to provide a spin motor for a disk drive having structural elements which support the stator at both its inner and outer diameters.

A motor in accordance with the present invention comprises: a shaft; a rotor; bearing means for rotatably mounting said rotor to said shaft; stator means for inducing said rotor to rotate, said stator means including a stator lamination having inner and outer diameters; and base means for supporting said shaft and for supporting said stator lamination at both said inner and outer diameters.

A spin motor in accordance with the present invention for rotating a disk in a disk drive, comprises: a base; a shaft having a first and second portions, said shaft being supported solely by mounting said first portion of said shaft in said base; first and second bearings provided at respective first and second positions on said second portion of said shaft; a hub, rotatably supported on said shaft by said first and second bearings, said hub having a disk support surface which is perpendicular to the axis of said shaft; a stator assembly mounted on said base, said stator assembly having an outer diameter; and means for bracing said stator assembly.

### BRIEF DESCRIPTION OF THE DRAWINGS

Fig. 1 is a sectional view of a disk drive spin motor in accordance with the first embodiment of the present invention;
Fig. 2 is an exploded view of a disk drive spin motor in accordance with the first embodiment of the present invention;
Fig. 3 is a sectional view of a disk drive spin motor in accordance with the second embodiment of the present invention;
Fig. 4 is an exploded view of a disk drive spin motor in accordance with the second embodiment of the present invention; and
Fig. 5 is a section view of a disk drive spin motor in accordance with a third embodiment of the present invention.

### DESCRIPTION OF THE PREFERRED EMBODIMENTS

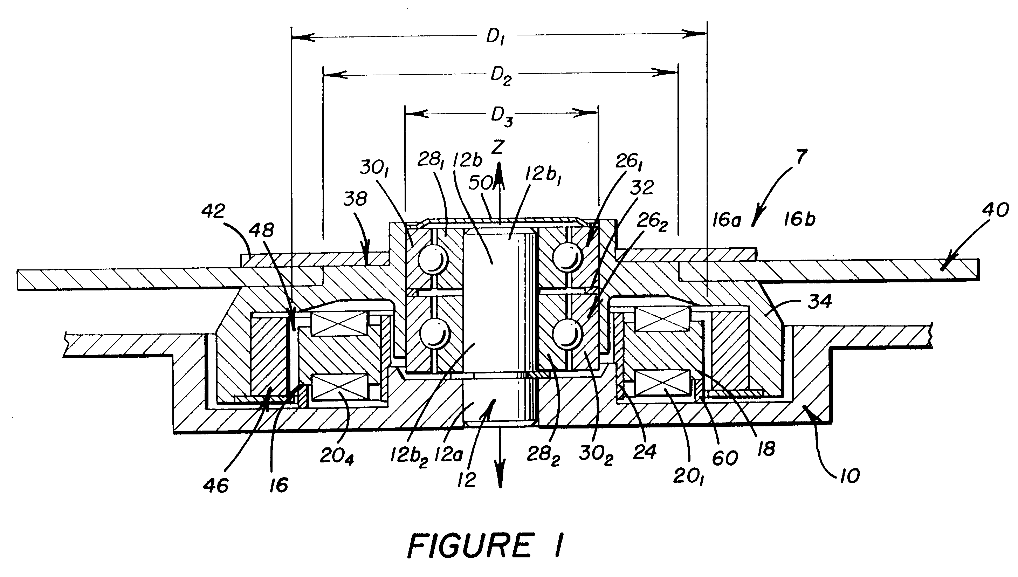

The preferred embodiments of the present invention are implemented in under-the-hub spin motors. First, second and third embodiments of spin motors in accordance with the present invention will be described will reference to Figures 1-4. Spin motors in accordance with the present invention may be brushless DC motors operated in accordance with the method disclosed in co-pending patent specification US-A-4 876 491 which is hereby incorporated by reference. However, the principles of the present invention are applicable to brushless motors operated in accordance with other methods and motors utilizing brushes -- although such motors are usually not desirable in disk drives -- and to motors in which either the armature or magnets rotate.

Under-the-hub spin motors 7, 8 in accordance with first and third embodiments of the present invention are illustrated in and will be described with reference to Figs. 1, 2, and 5. Spin motors 7, 8 of the first embodiment of the present invention are stationary shaft motors in which a flange 10 rigidly supports motor shaft 12. Spin motors 7, 8 are attached to a disk drive by mounting flange 10 on the base plate (not shown) of the disk drive. A stator assembly 16, including a stator lamination 18 and a plurality of coils 20₁₋₆ provided on stator lamination 18, is mounted on a collar 24, 24' provided on flange 10. Flange 10, shaft 12, and stator 16 comprise the stationary portion of spin motors 7, 8.

Shaft 12 has a first portion 12a, which mates with flange 10, and a second portion 12b. First and second bearings 26₁₋₂ are respectively provided on first and second ends 12b₁, 12b₂ of the second portion of 12b of shaft 12. The inner races 28₁₋₂ of bearings 26₁₋₂ are glued to the second portion 12b of shaft 12 in a preloading process described below. Outer races 30₁₋₂ of bearings 26₁₋₂ are separated by a spacer 32.

Hub 34 has an inner bearing surface 36 which mates with outer races 30₁₋₂ so that hub 34 is supported by and rotates on bearings 26₁₋₂. A disk support surface 38 provided on hub 34 is oriented so that the axis Z of shaft 12 is normal to the plane of disk support surface 38. Disk 40 rests on disk support surface 38 and is held in place by a retainer 42 which is attached to hub 34 by, for example, screw (not shown).

A rotor 46, comprising a multi-pole magnetic ring, is mounted on hub 34 so that rotor 46 is concentric with stator 16 and defines a gap 48 between stator 16 and rotor 46. Gap 48 has a diameter D₁ which is greater than the inside diameter D₂ of disk 40. Diameter D₂ is, in turn, greater than the diameter D₃ of inner bearing surface 36 of hub 34.

The under-the-hub design and the overlap of stator 16 and second bearing 26₂, provide spin motors 7, 8 with an overall height along axis Z which is less than the total height of bearings 26₁₋₂ and stator 16. The overlap and concentric relationship of stator 16 and second bearing 26₂ aids in reducing the height of motors 7, 8.

Spin motors 7, 8 are not hermetically sealed, although spin motors having a hermetic seal could be fabricated in accordance with the present invention. Instead, motors 7, 8 rely on a cap 50 to control the flow of air through the motor. Without such a cap, motors 7, 8 would pump air through the motors, enhancing the possibility that contaminants from the motors would enter the controlled environment within the disk drive. To reduce the likelihood of contamination, bearings 26₁₋₂ are sealed bearings and a labyrinth is formed between second bearing 26₂ and the disk drive environment -- the labyrinth has a path weaving around stator 16 and rotor 46.

Every spin motor has a resonant frequency or a peak in vibration frequency response. Problems with resistance to vibration often arise at applied vibration frequencies which are in phase with and thus add to the natural or internal vibrations of a spin motor. Accordingly, applied vibrations which fall at or near the resonant frequency can be the most troublesome vibrations.

The present invention was developed in response to a recognition that increasing the resonant frequency of a spin motor would increase the vibration tolerance of the spin motor. Thus, the spin motor and the disk drive in which the spin motor is mounted have a higher resonant frequency and are tolerant to applied vibrations of a larger frequency and amplitude range. It was also determined that an increase in the resonant frequency of spin motors 7, 8 could he achieved by increasing the stiffness, or resistance to deflections, of flange 10. Tests performed by the assignee of the subject Application demonstrated that spin motor 8, having a structure as described above, has an operating vibration frequency response peak in a range of approximately 440-460 Hz.

Flange 10 is fabricated from aluminum. The stiffness of flange 10 was successfully increased by fabricating a flange from steel rather than aluminum. However, a steel flange presented the problems of an increase in weight of the spin motor and, the difficulties and increased costs associated with manufacturing components with steel as opposed to aluminum.

The inventor discovered that a stabilizer ring 60, 60', which supports, or braces, outer diameter 16b of stator assembly 16 provides the desired increase in the stiffness of flange 10. It is believed that the increase in stiffness of flange 10 in the region surrounding shaft 12 is provided by (a) the box-like support reinforcement provided by flange 10, collar 24, 24', lamination 18 of stator assembly 16, and stabilizer ring 60, 60', or (b) to the resistance to movements of stator assembly 16 out of a plane normal to the Z-axis which is provided by stabilizer ring 60, 60', or both (a) and (b).

Stabilizer ring 60, 60' provides the desired increase in stiffness of flange 10, and the desired increase in resonant frequency, without adding a noticeable amount of weight to motors 7, 8. The increase in stiffness of flange 10 provided by stabilizer ring 60, 60' increases the operating frequency response peak for motor 8 by 60-70 Hz. Thus, a motor similar to motor 8 without a stabilizer ring has an operating frequency response peak of approximately 450 Hz, and motor 8 has an operating frequency response peak of approximately 510-520 Hz.

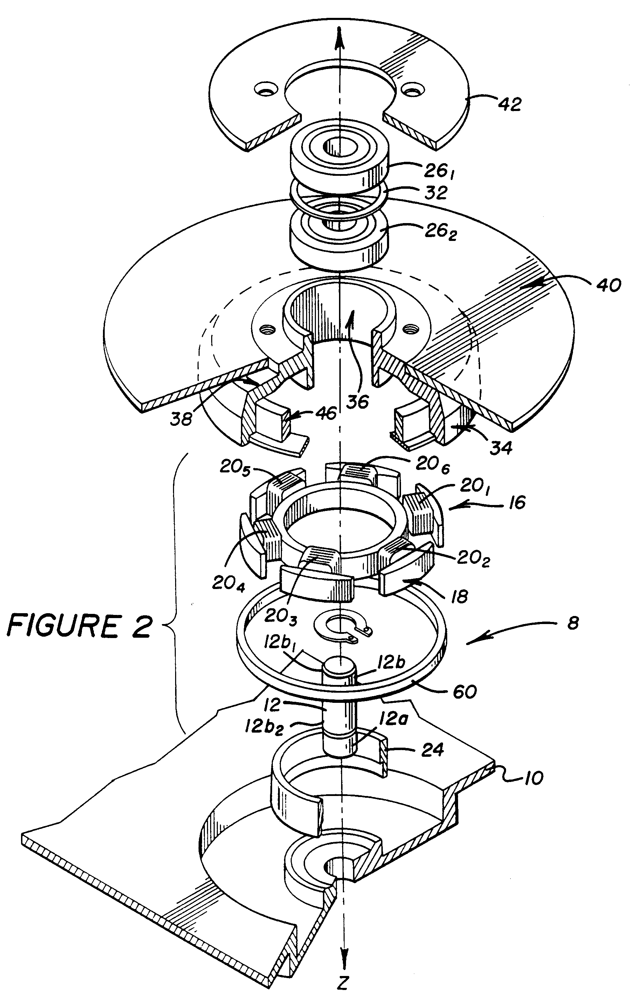

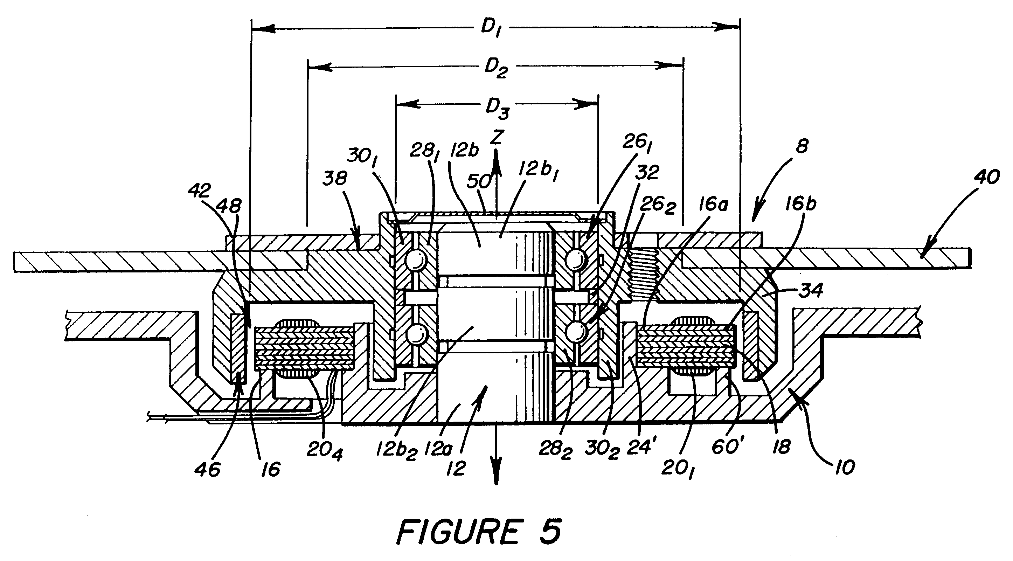

In motor 7, shown in Figs. 1 and 2, stabilizer ring 60 is a separate element in spin motor 7. In motor 8, shown in Fig. 5, stabilizer ring 60' is formed integrally with flange 10, preferably as a die cast feature of the flange 10. A further alternative for the structure of stabilizer ring 60, 60', is a series of posts supporting the various portions of stator lamination 18 associated with respective ones of windings 20₁₋₆.

As shown in Fig. 5, in the third embodiment of a spin motor in accordance with the present invention, collar 24' is formed integrally with flange 10, preferably as a die cast feature of flange 10, and has an L-shape which supports inner diameter 16a of stator assembly 16 in the radial direction and axial directions. In both the first and third embodiments, stator assembly 16 is glued to collar 24, 24' and stabilizer ring 60, 60'.

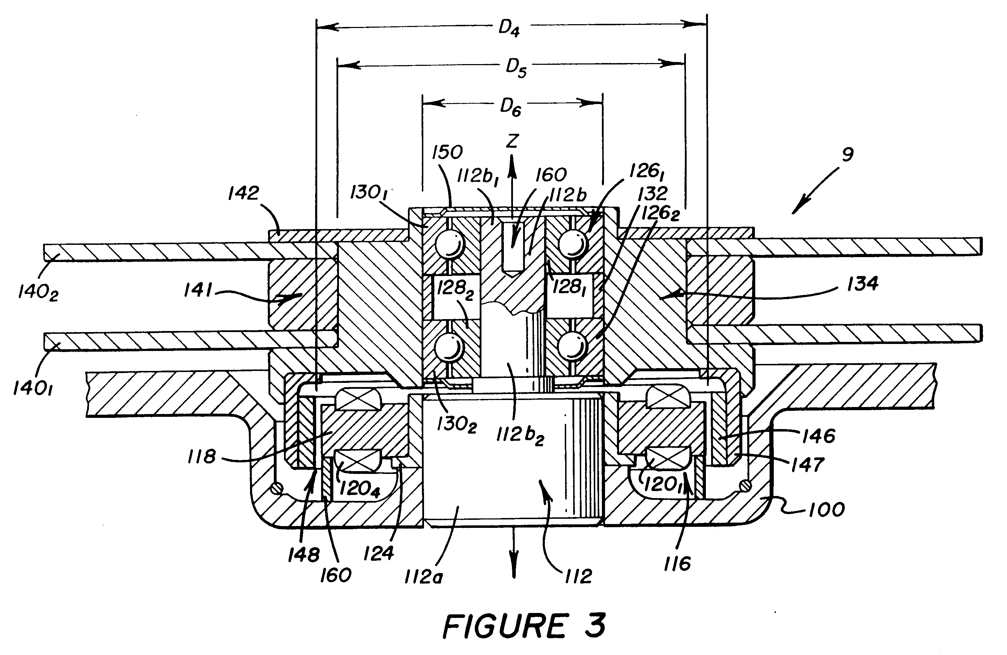

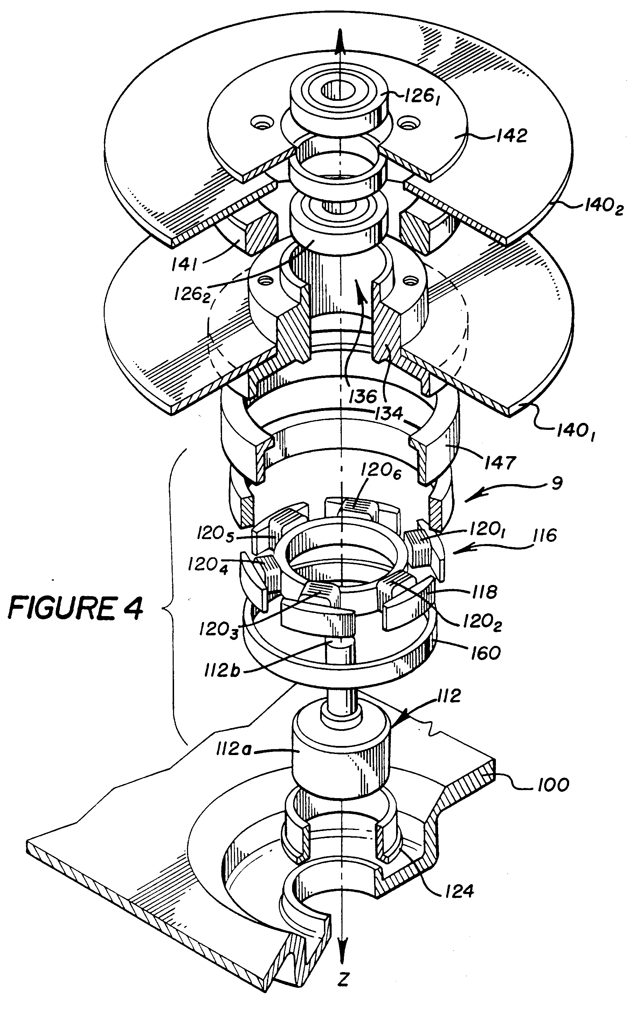

An under-the-hub spin motor 9 constructed in accordance with the second embodiment of the present invention is illustrated in Figs. 3 and 4. The second embodiment of the spin motor is also a stationary shaft motor. Spin motor 9 is attached to a disk drive by directly mounting a first portion 112a of shaft 112 to base plate 100 of the disk drive. To provide greater stability, first portion 112a of shaft 112 has a larger diameter than second portion 112b of shaft 112. The direct mounting of shaft 112 to the base plate eliminates one interface; whereas the first embodiment of the present invention has two interfaces (an interface between shaft 12 and flange 10 and an interface between flange 10 and the base plate) the second embodiment has only a single interface (the interface between shaft 112 and the base plate. Further, the direct mounting allows base plate 100 to act as a heat sink for spin motor 9.

A stator assembly 116, including a stator lamination 118 and a plurality of coils 120₁₋₆ provided on stator lamination 118, is mounted on a collar 124 which surrounds a first portion 112a of shaft 112 and abuts base plate 100. In a spin motor 9 the use of two disks 140₁₋₂ does not allow for an overlap of stator 116 and second bearing 126₂. Shaft 112, and stator 116 comprise the stationary portion of spin motor 9.

First and second bearings 126₁₋₂ are respectively provided on first and second ends 112b₁, 112b₂ of the second portion of 112b of shaft 112. The inner races 128₁₋₂ of bearings 126₁₋₂ are glued to the shaft 112 in a preloading process described below. Outer races 130₁₋₂ of bearings 126₁₋₂, which are separated by a spacer 132, support a hub 134 by contacting inner bearing surface 136 of hub 134.

The rotating elements of motor 9 comprise a hub assembly based on hub 34. Hub 134 has a disk support surface 138 which supports disk 140₁, a second disk 140₂ is separated from first disk 140₁ by a spacer 141. As in the first embodiment, disk support surface 138 is oriented so the the axis Z of shaft 112 is normal to the plane of disk support surface 138. Disks 140₁₋₂ are retained by retainer 142 attached to hub 134 by, for example screws (not shown).

Hub 134 is formed of aluminum to match the thermal expansion coefficients of thermal expansion of hub 134 and disks 140₁₋₂. Differences in these coefficients could cause the disks 140₁₋₂ to change position relative to hub 134 as the disks and the hub undergo thermal cycles. Further, in an aluminum hub 134 a bearing sleeve may be provided as an integral portion of hub 134, whereas a steel hub would require a bearing sleeve press-fit into the hub.

A rotor 146, comprising a multi-pole magnetic ring, is mounted on hub 134 by rotor collar 147. Rotor 146 is concentric with stator 116 and defines a gap 148 between stator 116 and rotor 146. As in the first embodiment, gap 148 has a diameter D4 which is greater than the inside diameter D₅ of disks 140₁₋₂, and diameter D₅ is, in turn, greater, than the diameter D₆ of inner bearing surface 136 of hub 134.

A cap 150 attached to hub 134 and a labyrinth, similar to that of motor 8 of the first embodiment, prevent air from freely flowing through motor 9. The stiffness of base 100 of motor 9 is increased by adding stabilizer ring 160, having a structure similar to and performing the same function as stabilizer rings 60, 60'. Stabilizer ring 160 may be a separate element in spin motor 9 or may be formed integrally with base 100.

Stabilizer rings 60, 60', 160 are described in the context of an under-the-hub spin motor. It is to be understood, however, that stabilizer rings may be provided in spin motors having many different structures.

The under-the-hub design of motors 8, 9 provides a large gap diameter D₄, and thus a large gap radius D₄/2, which causes under-the-hub spin motors 7, 8 and 9 to generate more torque than in-hub motors having the same number of turns in windings 20₁₋₂ 120₁₋₆ and magnets providing the same field strength as magnets 46, 146 in rotors 46, 146, and using the same operating current as motors, 7, 8 and 9. Further, since the torque produced by spin motors 7, 8 and, 9 is also related to the current in windings 20₁₋₆, 120₁₋₆ spin motors 7, 8 and 9 can produce the same amount of torque as an in-hub motor having the same size windings and the same type magnet using a smaller current. The reduction in the current is important in reducing the heat produced by the motor and reducing the power required by the spin motor, and thus the overall power required by the disk drive incorporating spin motors 7, 8 or 9.

The under-the-hub design also provides space inside the motor for a larger number of turns in each of windings 20₁₋₆, 120₁₋₆ allowing the use of larger diameter wire in windings 20₁₋₆, 120₁₋₆. A large number of turns is desired in order to generate the highest possible back EMF, and larger wire reduces the resistance in windings 20₁₋₆, 120₁₋₆ , allowing motors 7, 8 and 9 to operate at a lower voltage, for example 5 volts as opposed to the conventional operating voltage of 12 volts. For example, spin motor 9 has 70 turns of 36 gauge (.0056" diameter) wire per winding 120₁₋₆. Operated at 12 volts and 3600 rpm this motor produces a back EMF of 9 volts.

Preloading bearings 26₁₋₂ and 126₁₋₂ is performed by placing the bearings on the shaft with the appropriate spacing between outer races 30₁₋₂, 130₁₋₂, and then using a mechanical device to force the inner races 28₁₋₂, 128₁₋₂ towards one another with a carefully calibrated and constant force and maintaining this force while an adhesive used to attach bearings to the shaft cures. In spin motor 9, a threaded hole 160 is provided at the first end 112b₁ of first portion 112b of shaft 112 so that a preloading tool may be attached shaft 112.

## Claims

1. A motor comprising:
a base (10);
a rotor (46);
bearing means (26) for rotatably mounting said rotor (46) to said base (10);
stator means (16) for inducing said rotor (46) to rotate, said stator means (16) including a stator lamination (18) having an inner diameter and an outer diameter, said stator lamination (18) being mounted on said base (10) at said inner diameter; and
a stabilizer ring (60), provided on said base (10), for supporting said stator lamination (18) at said outer diameter.

2. A motor according to claim 1, characterised in that said stabilizer ring (60) is formed integrally with said base (10).

3. A motor according to claim 1 characterised by:
a shaft (12);
the base (10) supporting said shaft (12);
and the bearing means (26) rotatably mounting the rotor (46) to the shaft (12).

4. A motor according to claim 3, characterised in that:
said stabilizer ring (60) is formed integrally with said base (10);
said shaft (12) has a cylindrical axis;
said bearing means (26) mounts said rotor (46) so that the rotation of said rotor (46) is in a plane perpendicular to the cylindrical axis of said shaft (12); and
said stator lamination (18) is concentric with and lies in a plane perpendicular to the cylindrical axis of said shaft (12).

5. A motor according to claim 1 for rotating a disk in a disk drive, characterised by:
a hub (34) having a disk support surface (38);
said rotor (46) including a cylindrical permanent magnet having an inside diameter;
said bearing means (26) including first and second bearings (26, 26) for mounting said hub (34) to said base (10) so that said hub (34) rotates;
and the outer diameter of the stator lamination (18) being concentric with said inside diameter of said permanent magnet.

6. A motor according to claim 1 characterised by:
a shaft (12) having first and second portions (12a, 12b), said shaft (12) being supported solely by mounting said first portion (12a) of said shaft in the base (10);
the bearing means (26) including first and second bearings (26₂ and 26₂) provided at respective first and second positions on said second portion (12b) of said shaft (12); and
a hub (34) rotatably supported on said shaft (12) by said first and second bearings (26₁, 26₂), said hub (34) having a disk support surface (38) which is perpendicular to the axis of the said shaft (12).

7. A spin motor according to claim 6, characterised in that said stabilizer (60) ring is formed integrally with said base (10).

8. A motor according to claim 1 for rotating a disk in a disk drive, characterised by;
the base (10) including a mounting hole, a cylindrical mounting member having an outer diameter, and the stabilizer ring (60) having a diameter larger than and concentric with said cylindrical mounting member;
a shaft (12) having a first and second portions (12a, 12b) and a cylindrical axis, said first portion (12a) of said shaft (12) being mounted in said mounting hole;
said bearing means (26) including first and second bearings (26₁, 26₂) provided at respective first and second adjacent positions on said second portion (12b) of said shaft (12);
a hub (34) rotatably supported on said shaft (12) by said first and second bearings (26, 26), said hub (34) having a disk support surface (38) which is perpendicular to the cylindrical axis of said shaft (12);
the stator means (12) having an inner portion mounted on said outer diameter of said cylindrical mounting member.

9. A motor according to claim 1 for rotating a disk in a disk drive, the disk having a mounting hole having a diameter, the motor characterised by:
a shaft (12) having a first portion (12a), a second portion (12b), and a cylindrical axis, said first portion (12a) being mounted to the base (10);
a hub assembly, comprising:
a hub (34) including a bearing contact surface having a second diameter, and a disk support surface (38) which is perpendicular to the cylindrical axis of said shaft (12), and
the rotor (46) being mounted on said hub (34), said hub assembly having a center of mass;
the bearing means (26) including first and second bearings (26₁, 26₂) rotatably supporting said hub assembly on said second portion (12b) of said shaft (12) so that said rotor (46) is cantilevered with respect to the axial region between the first and second bearings (12a, 12b) and so that the center of mass of said hub assembly is positioned at a point on the cylindrical axis of said shaft between said first and second bearings (26₁, 26₂); and
the stator means (16) provided on the base (10) so that said rotor (46) is concentric with said stator assembly, said stator assembly having an outer diameter greater than the diameter of the mounting hole in the disk.

10. A motor according to claim 9, characterised in that said base (10) is a base of a disk drive.

11. A motor according to claim 9, characterised in that said base (10) is a mounting flange having a portion for mounting to a base of a disk drive.

## Patentansprüche

1. Motor, umfassend:
eine Basis (10);
einen Rotor (46);
Lager (26) zum drehbaren Lagern des Rotors (46) an der Basis (10);
einen Stator (16), der den Rotor (46) in Umdrehung versetzt, und der ein Stator-Blechpaket (18) mit einem Innendurchmesser und einem Außendurchmesser aufweist, das am Innendurchmesser an der Basis (10) gelagert ist; und
einen Stabilisatorring (60), der an der Basis (10) vorgesehen ist, um das Stator-Blechpaket (18) am Außendurchmesser zu lagern.

2. Motor nach Anspruch 1, dadurch gekennzeichnet, daß der Stabilisatorring (60) der Basis (10) einteilig angeformt ist.

3. Motor nach Anspruch 1, gekennzeichnet durch:
eine Welle (12);
die Basis (10) trägt die Welle (12);
das Lager (26) lagert den Rotor (46) drehbar auf der Welle (12).

4. Motor nach Anspruch 3, dadurch gekennzeichnet, daß der Stabilisatorring (60) der Basis (10) einteilig angeformt ist;
die Welle (12) eine zylindrische Achse aufweist;
das Lager (26) den Rotor (46) derart lagert, daß der Umlauf des Rotors (46) in einer Ebene senkrecht zur zylindrischen Achse der Welle (12) verläuft; und
das Stator-Blechpaket (18) konzentrisch zur zylindrischen Achse der Welle (12) angeordnet und in einer Ebene senkrecht hierzu liegt.

5. Motor nach Anspruch 1, zum Antreiben einer Platte bei einem Plattenantrieb, gekennzeichnet durch:
eine Nabe (34) mit einer Plattentragfläche (38);
der Rotor (46) umfaßt einen zylindrischen Dauermagneten mit einem Innendurchmesser;
das Lager (26) umfaßt ein erstes und ein zweites Lager (26, 26) zum Lagern der Nabe (34) auf der Basis (10), so daß die Nabe (34) umläuft;
der Außendurchmesser des Stator-Blechpaketes (18) ist konzentrisch zum Innendurchmesser des Dauermagneten.

6. Motor nach Anspruch 1, gekennzeichnet durch:
eine Welle (12), die einen ersten und einen zweiten Teil (12a, 12b) hat und die allein durch Lagern des ersten Teiles (12a) der Welle in der Basis (10) gelagert ist;
das Lager (26) beinhaltet ein erstes und ein zweites Lager (26₂ und 26₂), die in einer ersten und einer zweiten Position am zweiten Teil (12b) der Welle (12) angeordnet sind; und
eine Nabe (34) ist mittels des ersten und des zweiten Lagers (26₁, 26₂) drehbar auf der Welle (12) gelagert und weist eine Plattentragfläche (38) auf, die sich senkrecht zur Achse der Welle (12) erstreckt.

7. Drehmotor nach Anspruch 6, dadurch gekennzeichnet, daß der Stabilisatorring (60) der Basis (10) einteilig angeformt ist.

8. Motor nach Anspruch 1, zum Antreiben einer Platte bei einem Plattenantrieb, dadurch gekennzeichnet, daß die Basis (10) eine Montagebohrung aufweist, ein zylindrisches Montagelement mit einem Außendurchmesser und einen Stabilisatorring (16) mit einem Durchmesser, der größer ist als das zylindrische Montageelement und konzentrisch zu diesem angeordnet ist;
eine Welle (12) vorgesehen ist, mit einem ersten und einem zweiten Teil (12a, 12b) und einer zylindrischen Achse, wobei der erste Teil (12a) der Welle (12) in der Montagebohrung gelagert ist;
die Lager (26) ein erstes und ein zweites Lager (26₁, 26₂) aufweisen, die in einer ersten bzw. zweiten benachbarten Position am zweiten Teil (12b) der Welle (12) angeordnet sind;
eine Habe (34), die auf der Welle (12) mittels des ersten und des zweiten Lagers (26, 26) drehbar gelagert ist, und die eine Plattentragfläche (38) aufweist, die senkrecht zur zylindrischen Achse der Welle (12) angeordnet ist;
der Stator (12) einen inneren Teil aufweist, der auf dem Außendurchmesser des zylindrischen Montagelementes gelagert ist.

9. Motor nach Anspruch 1 zum Antreiben einer Platte bei einem Plattenantrieb, wobei die Platte eine Montagebohrung mit einem Durchmesser aufweist, gekennzeichnet durch:
eine Welle (12) mit einem ersten Teil (12a), einem zweiten Teil (12b) und einer zylindrischen Achse, wobei der erste Teil (12a) an der Basis (10) gelagert ist;
eine Naben-Einheit, umfassend:
eine Nabe (34) mit einer Lagerkontaktfläche, die einen zweiten Durchmesser aufweist, und eine Plattentragfläche, die senkrecht zur zylindrischen Achse der Welle (12) angeordnet ist, und wobei der Rotor (46) auf der Habe (34) gelagert ist und die Naben-Einheit ein Massenzentrum aufweist;
die Lager (26) beinhalten ein erstes und ein zweites Lager (26₁, 26₂), die die Naben-Einheit auf dem zweiten Teil (12b) der Welle (12) drehbar lagern, so daß der Rotor (46) in Bezug auf den axialen Bereich zwischen dem ersten und dem zweiten Lager (12a, 12b) fliegend gelagert ist, und daß das Massenzentrum der Naben-Einheit an einer Stelle der zylindrischen Achse der Welle zwischen dem ersten und dem zweiten Lager (26₁, 26₂) angeordnet ist, und
der Stator (16) derart auf der Basis (10) angeordnet ist, daß der Rotor (46) konzentrisch zur Stator-Einheit verläuft, und daß die Stator-Einheit einen Außendurchmesser aufweist, der größer als der Durchmesser der Montagebohrung in der Platte ist.

10. Motor nach Anspruch 9, dadurch gekennzeichnet, daß die Basis eine Basis des Plattenantriebes ist.

11. Motor nach Anspruch 9, dadurch gekennzeichnet, daß die Basis ein Montageflansch ist, mit einem Teil zum Montieren an einer Basis eines Plattenantriebes.

## Revendications

1. Moteur comprenant : une embase (10); un rotor (46); des moyens de pallier dur monter à rotation ledit rotor (46) sur ladite embase (10); des moyens de stator (16) pour induire la rotation dudit rotor (46), lesdits moyens de stator (16) comprenant une lamelle de stator (18) ayant un diamètre interne et un diamètre externe, ladite lamelle de stator (18) étant montée sur ladite embase (10) sur ledit diamètre interne et, une bague stabilisatrice (60), prévue sur ladite embase (10) afin de supporter ladite lamelle de stator (18) sur ledit dimètre externe.

2. Moteur selon la revendication 1 caractérisé en ce que ladite bague stabilisatrice (60) fait partie intégrante de ladite embase (10)

3. Moteur selon la revendication 1 caractérisé par un arbre (12); l'embase supportant ledit arbre (12) et les moyens de palier (26) montant à rotation le rotor (46) sur l'arbre (12)

4. Moteur selon la revendication 3 caractérisé en ce que ladite bague stabilisatrice (60) fait partie intégrante de ladite embase (10); ledit arbre (12) comporte un axe cylindrique ; lesdits moyens de palier (26) assurent le montage dudit rotor (46) de manière que la rotation dudit rotor (46) soit située dans un plan perpendiculaire à l'axe cylindrique dudit arbre (12), et ladite lamelle de stator (18) est concentrique avec, et située dans, un plan perpendiculaire à l'axe cylindrique dudit arbre (12).

5. Moteur selon la revendication 1 pour faire tourner un disque dans un système d'entrainement de disque caractérisé par un moyeu (34) comportant une surface de support de disque (38); ledit rotor (46) comportant un aimant permanent cylindrique ayant un diamètre interne ; lesdits moyens de palier (26) comportant des premier et second palliers (26, 26) pour monter ledit moyeu (34) sur ladite embase (10) afin de faire tourner ledit moyeu (34) et, le diamètre extérieur de ladite lamelle de stator (18) est concentrique au diamètre interne dudit aimant permanent.

6. Moteur selon la revendication 1 caractérisé par un arbre (12) comprenant des première et seconde portions (12a, 12b), ledit arbre (12) étant supporté uniquement en montant ladite première portion (12a) dudit arbre dans l'embase (10); les moyens de palier (26) comprenant des premier et second paliers (26₂, 26₂) prévus à des premier et second emplacements respectifs sur ladite seconde portion (12b) dudit arbre (12) et un moyeu (34) supporté à rotation par ledit arbre (12) à l'aide desdits premier et second paliers (26₁, 26₂), ledit moyeu (34) comportant une surface de support de disque (38) qui est perpendiculaire à l'axe dudit arbre (12).

7. Moteur de mise en rotation selon la revendication 6 caractérisée en ce que ladite bague stabilisatrice (60) est formée de façon intégrante avec ladite ambase (10).

8. Moteur selon la revendication 1 pour entrainer en rotation un disque dans un système d'entrainement de disque caractérisé en ce que : l'embase (10) comprend un trou de montage, un élément cylindrique de montage ayant un diamètre externe et la bague stabilisatrice (60) ayant un diamètre supérieur à celui de l'élément de montage cylindrique, étant concentrique à ce dernier ; un arbre (12) comprend une première et une seconde portion (12a, 12b) et un axe cylindrique, ladite première portion (12a) dudit arbre (12) étant montée dans ledit trou de montage ; lesdits moyens de palier (26) comprennent des premier et second paliers (26₁, 26₂), prévus en des premier et second emplacements respectifs et adjacents sur ladite seconde portion (12b) dudit arbre (12) ; un moyeu (34) est supporté à rotation sur ledit arbre (12) par lesdits premier et second paliers (26, 26), ledit moyeu (34) comportant une surface de support de disque (38) qui est perpendiculaire à l'axe cylindrique dudit arbre (12) et lesdits moyens de stator (12) comportent une portion interne montée sur ledit diamètre externe dudit élément de montage cylindrique.

9. Moteur selon la revendication 1 pour entrainer en rotation un disque dans un système d'entrainement de disque, le disque comportant un trou de montage ayant un diamètre et ledit moteur étant carectérisé par : un arbre (12) comportant une première portion (12a) une seconde portion (12b) et un axe cylindrique, ladite première portion (12a) étant montée sur ladite embase (10) ; un système de moyeu comprenant un moyeu (34) ayant une surface de contact de palier présentant un second diamètre et une surface de support de disque (38) qui est perpendiculaire à l'axe cylindrique dudit arbre (12) ; le rotor (46) état monté sur ledit moyeu (34), ledit système de moyeu présentant un centre de masse ; lesdits moyens de palier (26) comportant des premier et second paliers (26₁, 26₂), supportant à rotation ledit système de moyeu sur la seconde portion (12b) dudit arbre (12), afin que ledit rotor (46) soit en porte à faux par rapport à la région axiale entre le premier et le second palier (12a, 12b) et de façon que le centre de masse dudit système de moyeu soit positionné en un point de l'axe cylindrique dudit arbre situé entre ledit premier et ledit second palier (26₁, 26₂), et les moyens de stator sont prévus sur l'embase (10) de manière que ledit rotor (46) soit concentrique audit système de stator, ce système de stator ayant un diamètre extérieur plus grand que la diamètre du trou de montage dans le disque.

10. Moteur selon la revendication 9 caractérisé en ce que ladite embase (10) est l'embase d'un système d'entrainement de disque.

11. Moteur selon la revendication 9 caractérisé en ce que ladite embase (10) est une collerette de montage comportant une portion permettant de se monter sur l'embase d'un système d'entrainement de disque.
